# EUROPEAN PATENT APPLICATION

(11) **EP 4 447 558 A1**
(43) Date of publication of application: **16.10.2024**
(21) Application number: 21966667.4
(22) Date of filing: 07.12.2021
(51) Int. Cl.: H04W 48/02, H04W 76/16, H04W 36/08

(54) **ACCESS CONTROL METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Dehns Germany Partnerschaft mbB
(86) International application number: PCT/CN2021/136164
(87) International publication number: WO 2023/102743

(57) **Abstract**

An access control method and apparatus, capable of being applied to mobile communication technology. The method comprises: when a terminal device is in an access control prohibition state, determining, according to a selection result of cell selection, cell reselection, relay reselection or relay selection, whether to end the access control prohibition state. Hence, whether the terminal device ends the access control prohibition state is determined according to the selection result of cell selection, the selection result of cell reselection, the selection result of relay reselection or the selection result of the relay selection, such that initiating access to a network is prohibited when determining not to end (i.e.. to maintain) the access control prohibition state, and thus network congestion can be relieved.

## Description

### TECHNICAL FIELD

The disclosure relates to a field of communication technologies, and more particularly to an access control method and an access control apparatus.

### BACKGROUND

A terminal may communicate with a network device through a relay of another terminal instead of directly connecting to the network device. The terminal not connected to the network device is called a remote terminal, and the terminal providing a relay function is called a relay terminal. Unicast communication between the remote terminal and the relay terminal is performed via a sidelink.

In the related art, when the remote terminal resides in a cell through the relay terminal, a timer T390 may be started if access control detection fails. However, when the remote terminal performs a cell reselection and a newly selected cell is still the cell where the terminal was used to reside through the relay, or when the remote terminal performs a relay reselection and a cell where the terminal resides through a new relay is still the cell where the terminal was used to reside, the terminal may stop the timer T390. In this case, access control may be no longer valid, and the terminal may initiate access continuously, thus causing network congestion.

### SUMMARY

Embodiments of a first aspect of the disclosure provide an access control method. The method is performed by a terminal. The method includes: when the terminal is in an access control barring state, determining, based on a selection result of a cell selection, a cell reselection, a relay reselection or a relay selection, whether to stop the access control barring state.

In the technical solution, whether to stop the access control barring state is determined based on the selection result of the cell selection, the cell reselection, the relay reselection or the relay selection when the terminal is in the access control barring state. Thus, it is determined whether the terminal stops the access control barring state based on the selection result of the cell selection, the selection result of the cell reselection, the selection result of the relay reselection or the selection result of the relay selection of the terminal, such that initiating the access to the network is barred when it is determined that the access control barring state is not stopped (i.e., it is maintained), and the network congestion may be alleviated.

In a possible implementation, determining, based on the selection result of the cell selection, the cell reselection, the relay reselection or the relay selection, whether to stop the access control barring state includes:

stopping the access control barring state in response to the selection result being that a cell resided by the terminal before the terminal performs the cell selection, the cell reselection, the relay reselection or the relay selection is different from a current cell resided by the terminal after the terminal performs the cell selection, the cell reselection, the relay reselection or the relay selection.

In a possible implementation, the method further includes:
maintaining the access control barring state in response to the selection result being that the cell resided by the terminal before the terminal perform the cell selection, the cell reselection, the relay reselection or the relay selection is the same as the current cell resided by the terminal.

In a possible implementation, the cell reselection includes:
performing the cell reselection by connecting to a network device through a relay corresponding to the terminal.

In a possible implementation, the relay reselection or the relay selection includes:
performing the relay reselection by connecting to a network device through a relay corresponding to the terminal; or
performing the relay selection by connecting to a network device without using a relay corresponding to the terminal.

In a possible implementation, the cell reselection is initiated by any one of:
an initiation of an access layer condition of the terminal in an idle state or an inactive state; and
an initiation of reconstruction.

In a possible implementation, the access control barring state is controlled by a timer T390, in which a duration in which the T390 is operated corresponds to the access control barring state, the access control barring state is stopped correspondingly when the T390 is stopped, and the access control barring state is maintained correspondingly when the T390 is not stopped.

Embodiments of a second aspect of the disclosure provide an access control apparatus. The access control apparatus has a function of implementing part or all of the functions of the terminal in the method described in the first aspect. For example, the function of the access control apparatus may have the function of part or all of the embodiments in the disclosure, or may also have the function of independently implementing any of the embodiments in the disclosure. The functions may be implemented by hardware, or by hardware executing corresponding software. The hardware or software includes one or more units or modules corresponding to the above functions.

Embodiments of a third aspect of the disclosure provide an access control device. The device includes: a processor. When the processor calls a computer program in a memory, the above method described in the first aspect is performed.

Embodiments of a fourth aspect of the disclosure provide another access control device. The device includes a processor and a memory. The memory has a computer program stored thereon. When the computer program is executed by the processor, the above method described in the first aspect is performed.

Embodiments of a fifth aspect of the disclosure provide another access control device. The device includes a processor and an interface circuit. The interface circuit is configured to receive code instructions and transmit the code instructions to the processor. The processor is configured to execute the code instructions to perform the above method described in the first aspect.

Embodiments of a sixth aspect of the disclosure provide a communication system. The system includes the access control apparatus described in the second aspect, the access control device described in the third aspect, the access control device described in the fourth aspect, or the access control device described in the fifth aspect

Embodiments of a seventh aspect of the disclosure provide a computer-readable storage medium having instructions stored thereon. When the instructions are executed, the terminal is caused to implement the above method described in the first aspect.

Embodiments of an eighth aspect of the disclosure provide a computer program product including a computer program. When the computer program is executed on a computer, the computer is caused to perform the method described in the first aspect.

Embodiments of a ninth aspect of the disclosure provide a chip system. The chip system includes at least one processor and an interface, and is configured to support a network device to implement the functions related to the first aspect, for example, determining or processing at least one of data and information related to the above method. In a possible design, the chip system further includes a memory. The memory is configured to store computer programs and data necessary for the network device. The chip system may be composed of chips, and may also include chips and other discrete devices.

Embodiments of a tenth aspect of the disclosure provide a computer program. When the computer program is executed on a computer, the computer is caused to execute the above method described in the first aspect.

### BRIEF DESCRIPTION OF THE DRAWINGS

In order to clearly illustrate the technical solution in embodiments of the disclosure or the background technologies, a description will be made below to accompanying drawings used in the embodiments of the disclosure or the background technologies.
FIG. 1 is a structure schematic diagram illustrating a communication system according to an embodiment of the disclosure.
FIG. 2 is a flow chart illustrating an access control method according to an embodiment of the disclosure.
FIG. 3 is a flow chart illustrating an access control method according to another embodiment of the disclosure.
FIG. 4 is a flow chart illustrating an access control method according to another embodiment of the disclosure.
FIG. 5 is a flow chart illustrating an access control method according to another embodiment of the disclosure.
FIG. 6 is a block diagram illustrating an access control apparatus according to an embodiment of the disclosure.
FIG. 7 is a block diagram illustrating an access control device according to another embodiment of the disclosure.
FIG. 8 is a block diagram illustrating a chip according to an embodiment of the disclosure.

### DETAILED DESCRIPTION

In order to better understand an access control method in embodiments of the disclosure, description will be made below to a communication system to which embodiments of the disclosure are applied.

In order to enable the purpose, the technical solution and advantages of the disclosure clear, detailed description will be further made below to implementations of the disclosure with reference to the accompanying drawings.

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with the disclosure. Instead, they are merely examples of apparatuses and methods consistent with some aspects of the disclosure as detailed in the appended claims.

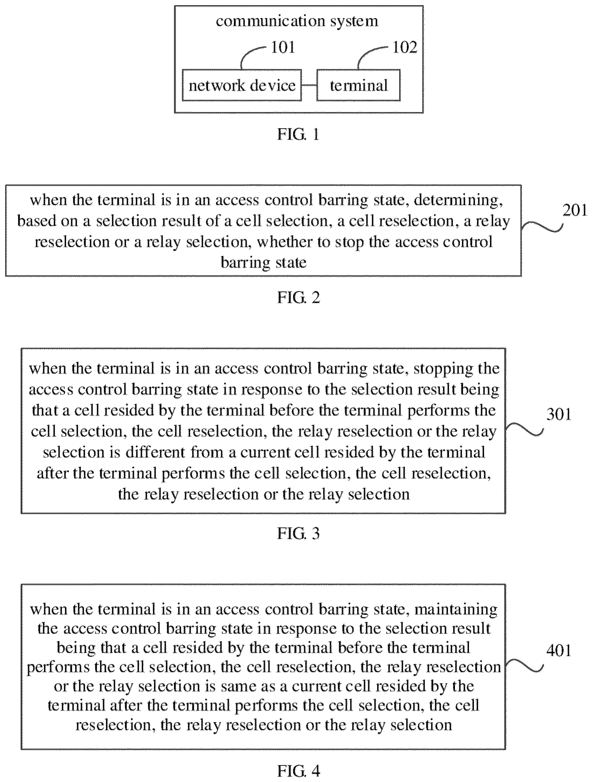

Referring to FIG. 1, FIG. 1 is a structure schematic diagram illustrating a communication system according to an embodiment of the disclosure. The communication system may include, but is not limited to, a network device and a terminal. The number and form of devices illustrated in FIG. 1 are only for examples and do not constitute a limitation on embodiments of the disclosure, and two or more network devices and two or more terminals may be included in practical application. The communication system illustrated in FIG. 1 includes, for example, a network device 101, and a terminal 102.

It should be noted that, the technical solutions according to embodiments of the disclosure can be applied to various communication systems, such as, a long term evolution (LTE) system, a 5th generation (5G) mobile communication system, a 5G new radio (NR) system, or other future new mobile communication systems.

The network device 101 in embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and a specific device form adopted by the network device are not limited in embodiments of the disclosure. The network device according to embodiments of the disclosure may be composed of a central unit (CU) and distributed units (DU). The CU may also be called a control unit. The use of a CU-DU structure allows to split a protocol layer of the network device, such as a base station, with some functions of the protocol layer placed in the CU for centralized control, and some or all of the remaining functions of the protocol layer distributed in the DUs, which are intensively controlled by the CU.

The terminal 102 in embodiments of the disclosure is an entity on a user side for receiving or transmitting signals, such as a cellular phone. The terminal may also be referred to as a terminal, user equipment (UE), a mobile station (MS), a mobile terminal (MT), and the like. The terminal can be a vehicle with a communication function, a smart vehicle, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and a specific device form adopted by the terminal are not limited in embodiments of the disclosure.

In the above communication system, the terminal may perform a unified access control detection when the terminal intends to connect to the network. A timer T390 may be started when the access control detection fails. The terminal is barred from initiating access to the network during the operation of the timer T390. During the operation of the timer T390, the timer T390 may be stopped when a terminal in an idle state or an inactive state performs a cell reselection.

The terminal may communicate with the network device through a relay of another terminal device instead of directly connecting to the network device. The terminal not connected to the network device is called a remote terminal, and the terminal providing a relay function is called a relay terminal. Unicast communication between the remote terminal and the relay terminal is performed via a sidelink.

The unified access control detection is also may be performed when the remote terminal establishes a connection with the network device through the relay terminal.

The relay terminal and the remote terminal may be in an idle state or an inactive state of RRC (radio resource control). When the remote terminal has data to be relayed, the relay terminal may be initiated to establish an RRC connection and enter an RRC connection state.

In the related art, in case that the remote terminal resides in a cell through the relay terminal, the timer T390 may be started when the access control detection fails. However, when the remote terminal performs a cell reselection and a newly selected cell is still the cell where the terminal was used to reside through the relay, or when the remote terminal performs a relay reselection and a cell where the terminal resides through a new relay is still the cell where the terminal was used to reside, the terminal may stop the timer T390, which causes that access control may be no longer valid, thus causing network congestion.

For the above problems, the disclosure provides an access control method and an access control apparatus.

It may be understood that, the communication system described in embodiments of the disclosure is intended to more clearly illustrate the technical solutions of embodiments of the disclosure, and does not constitute a limitation on the technical solutions of embodiments of the disclosure. It is understandable by those skilled in the art that, as the system architecture evolves and new business scenarios emerge, the technical solutions according to embodiments of the disclosure are also applicable to similar technical problems.

Description will be made in detail below to the access control method and the access control apparatus according to the disclosure with reference to the accompanying drawings.

Referring to FIG. 2, FIG. 2 is a flow chart illustrating an access control method according to an embodiment of the disclosure. The access control method may be executed by the terminal in the communication system illustrated in FIG. 1.

As illustrated in FIG. 2, the access control method may include, but not limited to, following steps.

At step 201, when the terminal is in an access control barring state, whether to stop the access control barring state is determined based on a selection result of a cell selection, a cell reselection, a relay reselection or a relay selection.

In any embodiment of the disclosure, the terminal may perform the cell selection when the terminal does not access a network.

In any embodiment of the disclosure, the cell reselection may include that the terminal performs the cell reselection by connecting to the network device through a relay corresponding to the terminal device.

In any embodiment of the disclosure, the relay reselection may include that the terminal performs the relay reselection by connecting to the network device through the relay corresponding to the terminal. That is, in case that the terminal is connected to the network device through a corresponding relay, the relay reselection may be initiated and performed, such that the terminal is connected to the network device through the reselected relay.

In any embodiment of the disclosure, the relay selection may include that the terminal does not use the relay corresponding to the terminal to connect to the network device when performing the relay selection. For example, in case that the terminal is directly connected to the network device, the relay selection may be initiated and performed, such that the terminal is connected to the network device through the selected relay. Or, the terminal may initiate the relay selection when the terminal does not access to the network, and performs the relay selection, to connect the network device through the selected relay.

In embodiments of the disclosure, the access control barring state is that the terminal is in a state of barring the access control.

In embodiments of the disclosure, the access control is controlled by a timer T390, and the access control barring state corresponds to an operation of the timer T390.

In embodiments of the disclosure, the cell selection, the cell reselection, the relay reselection or the relay selection may be performed when the terminal is in the access control barring state.

In embodiments of the disclosure, it may be determined whether the terminal stops the access control barring state based on a selection result of the cell selection, a selection result of the cell reselection, a selection result of the relay reselection or a selection result of the relay selection of the terminal. The access to the network may be initiated when it is determined that the terminal stops the access control barring state. Initiating the access to the network is barred when it is determined that the access control barring state is not stopped (i.e., it is maintained).

With the access control method of embodiments of the disclosure, whether to stop the access control barring state is determined based on the selection result of the cell selection, the cell reselection, the relay reselection or the relay selection when the terminal is in the access control barring state. Thus, it is determined whether the terminal stops the access control barring state based on the selection result of the cell selection, the selection result of the cell reselection, the selection result of the relay reselection or the selection result of the relay selection of the terminal, such that initiating the access to the network is barred when it is determined that the access control barring state is not stopped (i.e., it is maintained), and the network congestion may be alleviated.

Referring to FIG. 3, FIG. 3 is a flow chart illustrating an access control method according to another embodiment of the disclosure. The access control method may be executed by the terminal in the communication system illustrated in FIG. 1. The access control method may be executed alone, in combination with any embodiment or possible implementation in embodiments of the disclosure, or in combination with any technical solution in the related art.

As illustrated in FIG. 3, the access control method may include, but not limited to, following steps.

At step 301, when the terminal is in an access control barring state, the access control barring state is stopped in response to a selection result of a cell selection, a cell reselection, a relay reselection or a relay selection being that a cell resided by the terminal before the terminal performs the cell selection, the cell reselection, the relay reselection or the relay selection is different from a current cell resided by the terminal after the terminal performs the cell selection, the cell reselection, the relay reselection or the relay selection.

In embodiments of the disclosure, explanation of the access control barring state, the cell selection, the cell reselection, the relay reselection or the relay selection may be referred to any embodiment of the disclosure, which is not elaborated here.

In embodiments of the disclosure, the cell resided by the terminal before the terminal performs the cell selection may be determined, the cell resided by the terminal before the terminal performs the cell reselection may be determined, the cell resided by the terminal before the terminal performs the relay reselection may be determined, or the cell resided by the terminal before the terminal performs the relay selection may be determined.

In embodiments of the disclosure, the current cell resided by the terminal after the terminal performs the cell selection may be determined, the current cell resided by the terminal after the terminal performs the cell reselection may be determined, the current cell resided by the terminal after the terminal performs the relay reselection may be determined, or the current cell resided by the terminal after the terminal performs the relay selection may be determined.

In embodiments of the disclosure, in case that the selection result of the cell selection, the cell reselection, the relay reselection or the relay selection is that the cell resided by the terminal before the terminal performs the cell selection, the cell reselection, the relay reselection or the relay selection is different from the current cell resided by the terminal, it may be determined that the terminal stops the access control barring state.

As an example, the access control barring state corresponds to an operation of a timer T390. The timer T390 may be stopped when the cell resided by the terminal before the terminal performs the cell selection, the cell reselection, the relay reselection or the relay selection is different from the current cell resided by the terminal.

With the access control method of embodiments of the disclosure, whether to stop the access control barring state is determined based on the selection result of the cell selection, the cell reselection, the relay reselection or the relay selection when the terminal is in the access control barring state. Thus, it is determined whether the terminal stops the access control barring state based on the selection result of the cell selection, the selection result of the cell reselection, the selection result of the relay reselection or the selection result of the relay selection of the terminal, such that initiating the access to the network is barred in case that it is determined that the access control barring state is not stopped (i.e., it is maintained), and the network congestion may be alleviated.

It should be noted that, the above possible implementations may be executed separately or together, which is not limited in embodiments of the disclosure.

Referring to FIG. 4, FIG. 4 is a flow chart illustrating an access control method according to another embodiment of the disclosure. The access control method may be executed by the terminal in the communication system illustrated in FIG. 1. The access control method may be executed alone, in combination with any embodiment or possible implementation in embodiments of the disclosure, or in combination with any technical solution in the related art.

As illustrated in FIG. 4, the access control method may include, but not limited to, following steps.

At step 401, when the terminal is in an access control barring state, the access control barring state is maintained in response to a selection result of a cell selection, a cell reselection, a relay reselection or a relay selection being that a cell resided by the terminal before the terminal performs the cell selection, the cell reselection, the relay reselection or the relay selection is same as a current cell resided by the terminal after the terminal performs the cell selection, the cell reselection, the relay reselection or the relay selection.

In embodiments of the disclosure, it is determined that the terminal maintains (i.e. not stop) the access control barring state in case that the cell resided by the terminal before the terminal performs the cell selection, the cell reselection, the relay reselection or the relay selection is the same as the current cell resided by the terminal after the terminal performs the cell selection, the cell reselection, the relay reselection or the relay selection.

As an example, the access control barring state corresponds to an operation of a timer T390. The timer T390 does not have to be stopped in case that the cell resided by the terminal before the terminal performs the cell selection, the cell reselection, the relay reselection or the relay selection is the same as the current cell resided by the terminal.

With the access control method of embodiments of the disclosure, whether to stop the access control barring state is determined based on the selection result of the cell selection, the cell reselection, the relay reselection or the relay selection when the terminal is in the access control barring state. Thus, it is determined whether the terminal stops the access control barring state based on the selection result of the cell selection, the selection result of the cell reselection, the selection result of the relay reselection or the selection result of the relay selection of the terminal, such that initiating the access to the network is barred in case that it is determined that the access control barring state is not stopped (i.e., it is maintained), and the network congestion may be alleviated.

It should be noted that, the above possible implementations may be executed separately or together, which is not limited in embodiments of the disclosure.

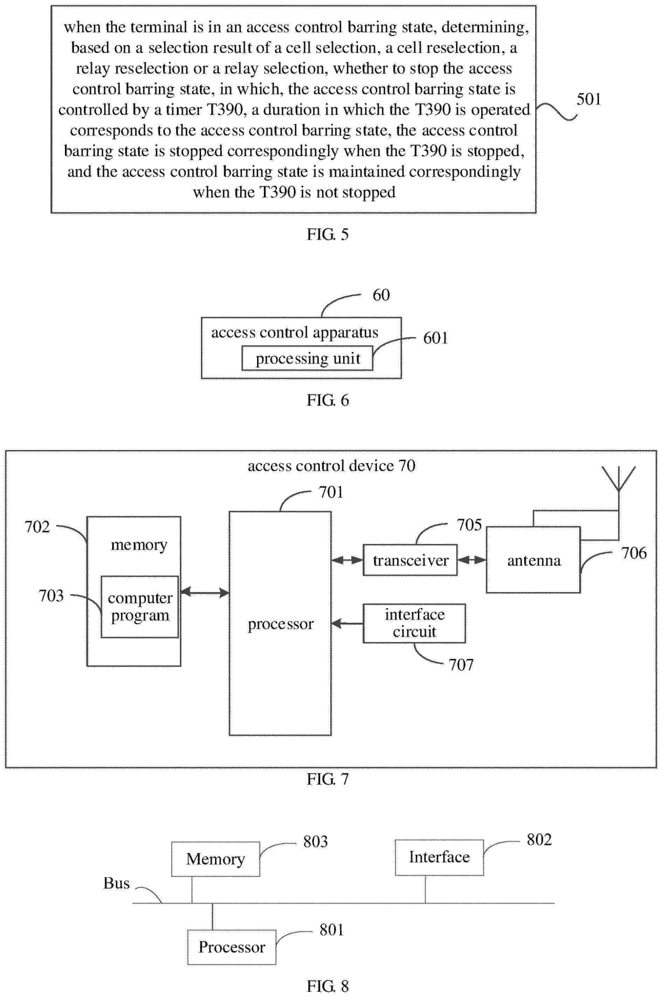

Referring to FIG. 5, FIG. 5 is a flow chart illustrating an access control method according to another embodiment of the disclosure. The access control method may be executed by the terminal in the communication system illustrated in FIG. 1. The access control method may be executed alone, in combination with any embodiment or possible implementation in embodiments of the disclosure, or in combination with any technical solution in the related art.

As illustrated in FIG. 5, the access control method may include, but not limited to, following steps.

At step 501, when the terminal is in an access control barring state, whether to stop the access control barring state is determined based on a selection result of a cell selection, a cell reselection, a relay reselection or a relay selection. The access control barring state is controlled by a timer T390. A duration in which the T390 is operated corresponds to the access control barring state, the access control barring state is stopped correspondingly when the T390 is stopped, and the access control barring state is maintained correspondingly when the T390 is not stopped.

In any embodiment of the disclosure, the terminal may be connected to the network device through a relay corresponding to the terminal to perform the cell reselection.

In any embodiment of the disclosure, the terminal may be connected to the network device through the relay corresponding to the terminal to perform the relay reselection.

In any embodiment of the disclosure, the terminal may be connected to the network device without using the relay corresponding to the terminal to perform the relay selection.

In any embodiment of the disclosure, the cell reselection may be initiated by an access layer condition of the terminal in an idle state or an inactive state.

In any embodiment of the disclosure, the cell reselection may be initiated by reconstruction.

In embodiments of the disclosure, it may be determined whether the terminal stops the access control barring state based on the selection result of the cell selection, the cell reselection, the relay reselection or the relay selection of the terminal. The timer T390 may be stopped when it is determined that the terminal stops the access control barring state. However, the timer T390 does not have to be stopped when it is determined that the terminal device does not stop (i.e., maintain) the access control barring state.

With the access control method of embodiments of the disclosure, it is whether to stop the access control barring state is determined based on the selection result of the cell selection, the cell reselection, the relay reselection or the relay selection when the terminal is in the access control barring state. Thus, it is determined whether the terminal stops the access control barring state based on the selection result of the cell selection, the selection result of the cell reselection, the selection result of the relay reselection or the selection result of the relay selection of the terminal, such that initiating the access to the network is barred when it is determined that the access control barring state is not stopped (i.e., it is maintained), and the network congestion may be alleviated.

It should be noted that, the above possible implementations may be executed separately or together, which is not limited in embodiments of the disclosure.

In any embodiment of the disclosure, when the terminal is in the access control barring state, whether to stop the access control barring state may be determined based on the selection result of the cell reselection or the selection result of the relay selection of the terminal.

As an example, when the timer T390 is operated, the timer T390 may be stopped in case that the terminal performs the cell reselection and a cell resided after the cell reselection is different from a cell resided before the cell reselection.

As another example, when the timer T390 is operated, if the terminal switches from being directly connected to the network device to being connected to the network device through a corresponding relay, for example, the terminal selecting a relay when the terminal is directly connected to the network device, and connecting to the network device through the selected relay, the timer T390 may be stopped when the terminal performs the cell reselection and when the cell resided after the cell reselection is different from the cell resided before the cell reselection,.

As another example, when the timer T390 is operating, the timer T390 may be stopped in case that the terminal performs the relay selection or the relay reselection and the cell resided after the relay reselection or the relay selection is different from the cell resided before the relay reselection or the relay selection.

The cell reselection and the relay reselection may be initiated by the access layer condition of the terminal in the idle state or the inactive state, and may also be initiated by the reconstruction.

In the above embodiments according to the disclosure, description is made to the method according to the embodiments of the disclosure from the perspective of the terminal. In order to implement the functions in the method according to embodiments of the disclosure, the terminal may include a hardware structure and a software module, and implement the above functions in the form of the hardware structure, the software module, or a combination of the hardware structure and the software module. One of the above functions may be executed in a form of the hardware structure, the software module, or the combination of the hardware structure and the software module.

FIG. 6 is a block diagram illustrating an access control apparatus according to an embodiment of the disclosure. The access control apparatus 60 illustrated in FIG. 6 may include a processing unit 601. Alternatively, the access control apparatus 60 may also include a transceiver unit. The transceiver unit may include a sending unit and/or a receiving unit. The sending unit is configured to implement a sending function, and the receiving unit is configured to implement a receiving function. The transceiver unit may implement the sending function and/or the receiving function.

The access control apparatus 60 may be a terminal, a device in the terminal, or a device that may be used in conjunction with the terminal.

The access control apparatus 60 is a terminal, and includes a processing unit 601, configured to, when the terminal is in an access control barring state, determine, based on a selection result of a cell selection, a cell reselection, a relay reselection or a relay selection, whether to stop the access control barring state.

In some embodiments, the processing unit 601 is configured to stop the access control barring state in response to the selection result being that a cell resided by the terminal before the terminal performs the cell selection, the cell reselection, the relay reselection or the relay selection is different from a current cell resided by the terminal after the terminal performs the cell selection, the cell reselection, the relay reselection or the relay selection.

In some embodiments, the processing unit 601 is configured to maintain the access control barring state in response to the selection result being that the cell resided by the terminal before the terminal performs the cell selection, the cell reselection, the relay reselection or the relay selection is the same as the current cell resided by the terminal.

In some embodiments, the cell reselection includes performing the cell reselection by connecting to a network device through a relay corresponding to the terminal.

In some embodiments, the relay reselection or the relay selection includes: performing the relay reselection by connecting to a network device through a relay corresponding to the terminal; or performing the relay selection by connecting to a network device without using a relay corresponding to the terminal.

In some embodiments, the cell reselection is initiated by any one of: an initiation of an access layer condition of the terminal in an idle state or an inactive state; and an initiation of reconstruction.

In some embodiments, the access control barring state is controlled by a timer T390, in which a duration in which the T390 is operated corresponds to the access control barring state, the access control barring state is stopped correspondingly when the T390 is stopped, and the access control barring state is maintained correspondingly when the T390 is not stopped.

It should be noted that, the explanation of the method executed by the terminal side in any of the above embodiments from FIG. 2 to FIG. 5 is also applicable to the access control apparatus 60 in this embodiment, and the implementation principle is similar, which is not elaborated here.

Referring to FIG. 7, FIG. 7 is a block diagram illustrating an access control device according to another embodiment of the disclosure. The access control device 70 may be a terminal, or may be a chip, a chip system, a processor or the like for supporting the terminal to realize the above method. The device may be configured to realize the method according to the above method embodiments. For details, reference may be made to the description in the above method embodiments.

The access control device 70 may include one or more processors 701. The processor 701 may be a general-purpose processor, a dedicated processor or the like, such as a baseband processor or a central processor. The baseband processor may be configured to process a communication protocol and communication data. The central processor may be configured to control the access control device (such as a base station, a baseband chip, a terminal, a terminal chip, a DU or a CU, etc.), execute a computer program, and process data of the computer program.

Alternatively, the access control device 70 may also include one or more memories 702 having a computer program 703 stored thereon. The processor 701 is configured to execute the computer program 703, to enable the access control device 70 to execute the method according to the above method embodiments. The computer program 703 may be solidified in the processor 701, in which case, the processor 701 may be implemented by hardware.

Alternatively, the memory 702 may also have data stored thereon. The access control device 70 and the memory 702 may be set separately or integrated together.

Alternatively, the access control device 70 may further include a transceiver 705 and an antenna 706. The transceiver 705 may be called a transceiver unit, a transceiver, a transceiver circuit, etc., and is configured to realize the receiving and sending function. The transceiver 705 may include a receiver and a transmitter. The receiver may be called a receiving machine, a receiving circuit, or the like, and configured to implement a receiving function. The transmitter may be called a transmitting machine, a transmitting circuit, or the like, and is configured to implement a sending function.

Alternatively, the access control device 70 may further include one or more interface circuits 707. The interface circuit 707 is configured to receive code instructions and transmit the code instructions to the processor 701. The processor 701 is configured to execute the code instructions to enable the access control device 70 to execute the method according to the above method embodiments.

The access control device 70 is the terminal, and the processor 701 is configured to execute any of the above method embodiments of the disclosure.

It should be noted that, the explanation of the access control method in any of the embodiments in FIG. 2 to FIG. 5 is also applicable to the access control device 70 in this embodiment, and the implementation principle is similar, which is not elaborated here.

In an implementation, the processor 701 may include a transceiver for implementing the receiving and sending function. For example, the transceiver may be a transceiver circuit, an interface, or an interface circuit. The transceiver circuit, the interface or the interface circuit for implementing the receiving and sending function may be separated or integrated. The transceiver circuit, interface or interface circuit may be configured to read and write codes/data, or the transceiver circuit, interface or interface circuit may be configured to transmit or delivery signals.

In an implementation, the access control device 70 may include a circuit. The circuit may implement the sending, receiving or communicating function in the above method embodiments. The processor and transceiver described in the disclosure may be implemented in an integrated circuit (IC), an analog IC, a radio frequency integrated circuit (RFIC), a mixed-signal IC, an application specific integrated circuit (ASIC), a printed circuit board (PCB), an electronic device, and the like. The processor and the transceiver may also be manufactured by various IC process technologies, such as a complementary metal oxide semiconductor (CMOS), a n-metal oxide semiconductor (NMOS), a positive channel metal oxide semiconductor (PMOS), a bipolar junction transistor (BJT), a bipolar CMOS(BiCMOS), a silicon germanium (SiGe), a gallium arsenide (GaAs), etc.

The access control device described in the above embodiments may be a terminal, but the scope of the access control device described in the disclosure is not limited thereto, a structure of the access control device may not be limited by FIG. 7. The access control device may be a stand-alone device or may be a part of a larger device. For example, the access control device may be:
(1) an independent integrated circuit IC, a chip, a chip system or a subsystem;
(2) a set with one or more ICs, alternatively, the IC set may include storage components for storing data and computer programs;
(3) an ASIC, such as a modem;
(4) a module that may be embedded in other devices;
(5) the receiver, the terminal, the intelligent terminal, a cellular phone, a wireless device, a handset, a mobile unit, a vehicle-mounted device, a network device, a cloud device, an artificial intelligence device, etc.
(6) others and so on.

For a case that the access control device may be the chip or the chip system, reference may be made to a block diagram of the chip illustrated in FIG. 8. The chip illustrated in FIG. 8 includes a processor 801 and an interface 802. There may be one or more processors 801, and there may be multiple interfaces 802.

For a case where the chip is configured to implement the function of the terminal in embodiments of the disclosure:
the interface 802 is configured to receive code instructions and transmit the code instructions to the processor;
the processor 801 is configured to execute the code instructions to perform the methods as illustrated in FIGs. 2 to 5.

Alternatively, the chip also includes a memory 803. The memory 803 is configured to store necessary computer programs and data.

It should be noted that, the explanation of the access control method in any of the embodiments in FIG. 2 to FIG. 5 is also applicable to the chip of this embodiment, and the implementation principle is similar, which is not elaborated here.

Those skilled in the art may also understand that various illustrative logical blocks and steps listed in embodiments of the disclosure may be implemented by electronic hardware, computer software, or a combination of both. Whether such function is implemented by hardware or software depends on a specific application and a design requirement of a whole system. Those skilled in the art may use various methods to implement the described functions for each specific application, but such implementation should not be understood as beyond the protection scope of embodiments of the disclosure.

Embodiments of disclosure also provide a communication system. The communication system includes the access control device acted as the terminal in the above embodiment of FIG. 7, or includes the access control device acted as the terminal in the above embodiment of FIG. 8.

The disclosure also provides a readable storage medium having instructions stored thereon. When the instructions are executed by a computer, the function of any of the above method embodiments is performed.

The disclosure also provides a computer program product. When the computer program product is executed by a computer, the function of any of the above method embodiments is performed.

The above embodiments may be implemented in whole or in part by software, hardware, firmware or any combination thereof. When implemented using software, the above embodiments may be implemented, in whole or in part, in the form of the computer program product. The computer program product includes one or more computer programs. When loading and executing the computer program on a computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)) and the like.

Those skilled in the art understands that, the first, second, and other various numerical numbers involved in the disclosure are only described for the convenience of differentiation, and are not used to limit the scope of the embodiments of the disclosure, and not to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

It may be understood that, "a plurality" in this disclosure refers to two or more, and other quantifiers are similar thereto. "And/or", which describes an associated relationship of associated objects, means that there may be three relationships, for example, A and/or B, which may mean that A exists alone, A and B exist at the same time, and B exists alone. A character "j" generally indicates that contextual objects are in an "or" relationship. "A/an", "said" and "the" in singular forms are intended to include plural forms, unless clearly indicated in the context otherwise.

As used herein, the term "if' may be construed to mean "when" or "upon" or "in response to determining" depending on the context.

The correspondence relationships shown in the tables in the disclosure can be configured or predefined. The values of information in each table are only examples and can be configured to other values, which are not limited by the disclosure. When configuring the correspondence relationships between information and various parameters, it is not necessary to configure all the correspondence relationships shown in each table. For example, in the tables in the disclosure, some correspondence relationships shown in certain rows may not be configured. For another example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this disclosure may be understood as define, pre-define, store, pre-store, pre-negotiate, pre-configure, solidify, or pre-fire.

Those skilled in the art may realize that the units and steps of the various examples described with reference to the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, which is not elaborated herein.

The above implementations are only specific implementations of the disclosure, but the scope of protection of the disclosure is not limited thereto. Those skilled in the art familiar to the technical field can easily think of changes or substitutions in the technical scope disclosed by the disclosure, which shall be covered by the scope of protection of the disclosure. Therefore, the protection scope of the disclosure shall be governed by the protection scope of the stated claims.

## Claims

1. An access control method, performed by a terminal, comprising:
when the terminal is in an access control barring state, determining, based on a selection result of a cell selection, a cell reselection, a relay reselection or a relay selection, whether to stop the access control barring state.

2. The access control method of claim 1, wherein determining, based on the selection result of the cell selection, the cell reselection, the relay reselection or the relay selection, whether to stop the access control barring state comprises:
stopping the access control barring state in response to the selection result being that a cell resided by the terminal before the terminal performs the cell selection, the cell reselection, the relay reselection or the relay selection is different from a current cell resided by the terminal after the terminal performs the cell selection, the cell reselection, the relay reselection or the relay selection.

3. The access control method of claim 2, further comprising:
maintaining the access control barring state in response to the selection result being that the cell resided by the terminal before the terminal performs the cell selection, the cell reselection, the relay reselection or the relay selection is same as the current cell resided by the terminal.

4. The access control method of claim 1, wherein the cell reselection comprises:
performing the cell reselection by connecting to a network device through a relay corresponding to the terminal.

5. The access control method of claim 1, wherein the relay reselection or the relay selection comprises:
performing the relay reselection by connecting to a network device through a relay corresponding to the terminal; or
performing the relay selection by connecting to a network device without using a relay corresponding to the terminal.

6. The access control method of claim 1, wherein the cell reselection is initiated by any one of:
an initiation of an access layer condition of the terminal in an idle state or an inactive state; or
an initiation of reconstruction.

7. The access control method of claim 1, wherein the access control barring state is controlled by a timer T390, wherein a duration in which the T390 is operated corresponds to the access control barring state, the access control barring state is stopped correspondingly when the T390 is stopped, and the access control barring state is maintained correspondingly when the T390 is not stopped.

8. An access control apparatus, applied to a terminal, comprising:
a processing unit, configured to, when the terminal is in an access control barring state, determine, based on a selection result of a cell selection, a cell reselection, a relay reselection or a relay selection, whether to stop the access control barring state.

9. An access control device, comprising: a processor, and a memory having a computer program stored thereon that, when executed by the processor, performs the method according to any of claims 1 to 7.

10. An access control device, comprising: a processor and an interface circuit;
wherein the interface circuit is configured to receive code instructions and transmit the code instructions to the processor; and
the processor is configured to execute the code instructions to perform the method according to any one of claims 1 to 7.

11. A computer-readable storage medium having instructions stored thereon that, when executed, perform the method according to any one of claims 1 to 7.
